# EUROPEAN PATENT SPECIFICATION

(11) **EP 3 540 256 B1**
(45) Date of publication and mention of the grant of the patent: **13.10.2021**
(21) Application number: 17868567.3
(22) Date of filing: 30.10.2017
(51) Int. Cl.: F16D 25/0638, F16D 13/38, F16D 25/08, F16D 25/10, F16D 25/12

(54) **DOUBLE CLUTCH ACTUATOR AND DOUBLE CLUTCH INCLUDING SAME**
DOPPELKUPPLUNGSAKTUATOR UND DOPPELKUPPLUNG DAMIT
ACTIONNEUR D'EMBRAYAGE DOUBLE ET EMBRAYAGE DOUBLE LE COMPRENANT

(30) Priority: 09.11.2016 KR 20160148702
(43) Date of publication of application: 18.09.2019
(73) Proprietor: C-Stone Technologies Co., Ltd, Suwon-si, Gyeonggi-do 16229 (KR)
(72) Inventor: PARK, Dong-Hoon, Seongnam-si Gyeonggi-do 13600 (KR)
(74) Representative: Maikowski & Ninnemann Patentanwälte Partnerschaft mbB
(86) International application number: PCT/KR2017/012076
(87) International publication number: WO 2018/088740

(56) References cited:
- DE-A1-102009 035 910
- DE-A1-102009 035 911
- DE-A1-102011 115 227
- DE-A1-102012 006 730
- JP-B2- 5 738 305
- KR-A- 20060 046 484
- KR-A- 20130 032 160
- US-A1- 2015 152 924
- US-A1- 2015 219 167

## Description

### [Technical Field]

The present invention relates to a dual clutch, and more particularly, to a dual clutch including an actuator which is configured to alternately operate a first clutch for selectively transmitting power of a power source to a first output shaft and a second clutch for selectively transmitting power of the power source to a second output shaft.

### [Background Art]

An environmentally-friendly technology of vehicles is a key technology that dictates the survival of the future vehicle industry, and vehicle manufacturers have made a great effort to develop environmentally-friendly vehicles in order to meet regulations associated with environments and fuel economy. In addition, researches on dual clutch transmissions (or double clutch transmissions, DCT), as transmissions capable of being applied to the environmentally-friendly vehicles, are being actively conducted. The DCT has two clutches applied to a manual transmission structure to improve efficiency and convenience.

That is, the DCT refers to a transmission that performs a gear shift operation by alternately operating odd-numbered gear shift stages and even-numbered gear shift stages by using two clutches. A mechanism for alternately operating the odd-numbered gear shift stages and the even-numbered gear shift stages may solve a problem of torque interruption that occurs in the manual transmission (MT) in the related art when the gear shift operation is performed, and the mechanism may also easily perform the gear shift operation.

The DCT has the two clutches for selectively transmitting rotational power of an input shaft to first and second output shafts. In the related art, to prevent the operations of the two clutches from interfering with each other and to take account of structural situations, one clutch is configured to receive rotational power of the input shaft, and one clutch and the other clutch are connected to each other by a power transmission member so that the rotational power is transmitted from the input shaft to both the two clutches. In addition, pistons or diaphragm springs for operating respective clutches are provided separately from the power transmission member.

In the related art, various means have been employed to prevent the interference between the power transmission member and the piston or the diaphragm spring, but there is a problem in that the number of components is increased and the structure is complicated.

The inventor of the present invention filed Korean Patent Application No. 10-2015-0133933 for solving the above-mentioned problem. According to Korean Patent Application No. 10-2015-0133933, rotational power of a first clutch housing may be transmitted to a second clutch housing through a first piston for operating a first clutch, and as a result, there is an advantage in that the number of components and production costs may be reduced.

Further, the inventor of the present invention filed Korean Patent Application No. 10-2016-0047075. According to Korean Patent Application No. 10-2016-0047075, a hydraulic operating pressure, which has been supplied into a second operating piston chamber, is smoothly discharged when a hydraulic operating pressure is supplied into a first operating piston chamber, and the hydraulic operating pressure, which has been supplied into the first operating piston chamber, is smoothly discharged when the hydraulic operating pressure is supplied into the second operating piston chamber, and as a result, there is an advantage in that an alternate operation may be smoothly performed. In addition, there is also an advantage in that it is possible to decrease the hydraulic operating pressure because it is possible to increase an area to which hydraulic pressure of a piston is applied, and it is possible to reduce production costs because a housing is easily fabricated.

The above information disclosed in this Background section is only for enhancement of understanding of the background of the invention and therefore it may contain information that does not form the prior art that is already known in this country to a person of ordinary skill in the art.

Comparable devices are known from DE 10 2012 006730 A1, DE 10 2009 035911 A1, DE 10 2009 035910 A1 and DE 10 2011 115227 A1.

### [SUMMARY]

### [Technical Problem]

The present invention has been made in an effort to provide a dual clutch including the actuator which uses a hydraulic pressure and is suitable for alternate operations of various dual clutches as well as the above-mentioned dual clutch.

The present invention has also been made in an effort to provide a dual clutch including the actuator in which a first operating piston and a second operating piston are separated by a partition wall such that an operation of the first operating piston and an operation of the second operating piston may be independently controlled.

The present invention has also been made in an effort to provide a dual clutch including the actuator which is compact as a first operating piston and a second operating piston are separated by a partition wall and an outer circumferential surface of the second operating piston is positioned to be closer to a radially outer side than is an inner circumferential surface of the first operating piston.

### [Technical Solution]

The proposed solution relates to a dual clutch as defined by claim 1. An exemplary embodiment of the present invention provides an actuator which may be applied to a dual clutch including: a first clutch which is configured to selectively transmit rotational power of an input shaft to a first output shaft; a second clutch which is configured to selectively transmit the rotational power of the input shaft to a second output shaft; a first piston which operates the first clutch while being selectively and axially moved by axial force; and a second piston which operates the second clutch while being selectively and axially moved by the axial force. The actuator may be configured to transmit the axial force to the first piston or the second piston.

The actuator may have a first operating piston and a second operating piston which are provided in an actuator housing. The first operating piston may transmit the axial force to the first piston, and the second operating piston may transmit the axial force to the second piston.

The first operating piston and the second operating piston may be separated by a partition wall disposed between the first operating piston and the second operating piston, such that an operation of the first operating piston and an operation of the second operating piston may be independently controlled.

An outer circumferential surface of the second piston may be positioned to be closer to a radially outer side than is an inner circumferential surface of the first piston.

The partition wall may include: a partition wall mounting portion which is mounted in the actuator housing, extends axially forward, and is in contact with an outer circumferential surface of the second operating piston so that the outer circumferential surface of the second operating piston is slidable; a partition wall connecting portion which extends radially inward from the partition wall mounting portion; and a partition wall extension portion which extends axially forward from an inner end of the partition wall connecting portion and is in contact with an inner circumferential surface of the first operating piston so that the inner circumferential surface of the first operating piston is slidable.

The first operating piston may include a first operating piston extension portion which extends axially forward from a front surface of the first operating piston, and a first application bearing may be mounted on the first operating piston extension portion and may transmit the axial force to the first piston.

The first operating piston extension portion may be in contact with the partition wall extension portion, and a first sliding bearing may be mounted between the first operating piston extension portion and the partition wall extension portion.

A first operating piston chamber may be formed between a rear surface of the first operating piston and the partition wall connecting portion.

A first operating piston stepped portion may be formed at a radially inner side of the first operating piston extension portion, a first snap ring may be mounted on an outer circumferential surface of the partition wall extension portion, and a first return spring may be mounted between the first operating piston stepped portion and the first snap ring.

The second operating piston may include a second operating piston extension portion which extends axially forward from a front surface of the second operating piston, and a second application bearing may be mounted on the second operating piston extension portion and may transmit the axial force to the second piston.

A gap may be formed between the second operating piston extension portion and the partition wall extension portion.

The actuator housing may include a housing protruding portion which extends axially forward from an inner diameter portion of the actuator housing, and a second sliding bearing may be mounted between the second operating piston extension portion and the housing protruding portion.

A second operating piston stepped portion may be formed on the outer circumferential surface of the second operating piston extension portion, a second snap ring may be mounted on an inner circumferential surface of the partition wall extension portion, and a second return spring may be mounted between the second operating piston stepped portion and the second snap ring.

A second operating piston chamber may be formed between a rear surface of the second operating piston and the actuator housing.

The first operating piston extension portion, the partition wall extension portion, and the second operating piston extension portion may be disposed sequentially toward a radially inner side.

The second operating piston, the partition wall connecting portion, and the first operating piston may be disposed sequentially toward an axially front side.

The first clutch may include a first clutch housing which is operatively connected to the input shaft and rotates together with the input shaft, and the second clutch may include a second clutch housing which is operatively connected to the first clutch housing through the first piston and rotates together with the first clutch housing.

The first piston may be coupled, by means of splines, to an inner circumferential surface of the first clutch housing, and the second clutch housing may be joined to or formed integrally with the first piston.

The first clutch may include a first disc pack which is disposed between the first clutch housing and a first operating hub and selectively connects the first clutch housing and the first operating hub, and the first operating hub may be operatively coupled to the first output shaft.

The second clutch may include a second disc pack which is disposed between the second clutch housing and a second operating hub and selectively connects the second clutch housing and the second operating hub, and the second operating hub may be operatively coupled to the second output shaft.

Another exemplary embodiment of the present invention provides a dual clutch including: a first clutch including: a first clutch housing which is operatively connected to an input shaft and receives rotational power of the input shaft while rotating together with the input shaft; a first operating hub which is configured to selectively transmit the rotational power of the input shaft to a first output shaft; and a first disc pack which is mounted between the first clutch housing and the first operating hub and selectively and frictionally engages the first clutch housing and the first operating hub; a first piston which is configured to selectively apply axial force to the first disc pack; a second clutch including: a second clutch housing which is operatively connected to the first clutch housing through the first piston and receives the rotational power of the input shaft while rotating together with the first clutch housing; a second operating hub which is configured to selectively transmit the rotational power of the input shaft to a second output shaft; and a second disc pack which is mounted between the second clutch housing and the second operating hub and selectively and frictionally engages the second clutch housing and the second operating hub; a second piston which is configured to selectively apply the axial force to the second disc pack; and an actuator which is configured to apply the axial force to the first piston or the second piston, in which the actuator has a first operating piston and a second operating piston which are provided in an actuator housing, the first operating piston transmits the axial force to the first piston, the second operating piston transmits the axial force to the second piston, and the first operating piston and the second operating piston are separated by a partition wall disposed between the first operating piston and the second operating piston, such that an operation of the first operating piston and an operation of the second operating piston are independently controlled.

An outer circumferential surface of the second piston may be positioned to be closer to a radially outer side than is an inner circumferential surface of the first piston.

The partition wall may include: a partition wall mounting portion which is mounted in the actuator housing, extends axially forward, and is in contact with an outer circumferential surface of the second operating piston so that the outer circumferential surface of the second operating piston is slidable; a partition wall connecting portion which extends radially inward from the partition wall mounting portion; and a partition wall extension portion which extends axially forward from an inner end of the partition wall connecting portion and is in contact with an inner circumferential surface of the first operating piston so that the inner circumferential surface of the first operating piston is slidable.

The first operating piston may include a first operating piston extension portion which extends axially forward from a front surface of the first operating piston, the second operating piston may include a second operating piston extension portion which extends axially forward from a front surface of the second operating piston, and the first operating piston extension portion, the partition wall extension portion, and the second operating piston extension portion may be disposed sequentially toward a radially inner side.

The second operating piston, the partition wall connecting portion, and the first operating piston may be disposed sequentially toward an axially front side.

### [Advantageous Effects]

According to the exemplary embodiment of the present invention, the operation of the first operating piston and the operation of the second operating piston may be independently controlled since the first operating piston and the second operating piston are separated by the partition wall. In addition, a compact structure may be realized since the first operating piston and the second operating piston are separated by the partition wall and the outer circumferential surface of the second operating piston is positioned to be closer to the radially outer side than is the inner circumferential surface of the first operating piston.

### [Description of the Drawings]

FIG. 1 is a cross-sectional view of a dual clutch according to an exemplary embodiment of the present invention.
FIG. 2 is a cross-sectional view of a dual clutch according to another exemplary embodiment of the present invention.

### [Mode for Invention]

Hereinafter, exemplary embodiments of the present invention will be described in detail with reference to the accompanying drawings so that those with ordinary skill in the art to which the present invention pertains may easily carry out the exemplary embodiments. However, the present invention may be implemented in various different ways and is not limited to the exemplary embodiments described herein.

A part irrelevant to the description will be omitted to clearly describe the present invention, and the same or similar constituent elements will be designated by the same reference numerals throughout the specification.

In the following description, names of constituent elements are classified as a first ..., a second ..., and the like so as to discriminate the constituent elements having the same name, and the names are not essentially limited to the order in the description below.

In addition, a 'front side', a 'front portion', a 'front end', or a 'front end portion' indicates a 'side', a 'portion', or an 'end' close to an input shaft, and a 'rear side', a 'rear portion', a 'rear end', or a 'rear end portion' indicates a 'side', a 'portion', or an 'end' distant from the input shaft.

For example, a dual clutch according to an exemplary embodiment of the present invention may be used for a dual clutch transmission (double clutch transmission, DCT). In the dual clutch transmission, multiple input gears are distributed and disposed on two input shafts, and multiple output gears, which engage with the multiple input gears, respectively, are distributed and disposed on two output shafts. In addition, the dual clutch transmission includes multiple synchronizer mechanisms, and the multiple synchronizer mechanisms selectively operate to connect one of the multiple output gears and one of the two output shafts. In addition, the dual clutch is configured to transmit power of a power source (e.g., an engine or a motor) to any one of the two output shafts. A dry or wet clutch may be used as the dual clutch.

Meanwhile, it should be understood that in the present specification and the claims, the input shaft and the first and second output shafts are related to a flow of power in view of the dual clutch. That is, the input shaft means a shaft that inputs rotational power to the dual clutch, and the input shaft may be a crank shaft of the engine, a motor shaft of the drive motor, or a separate shaft connected to the crank shaft or the motor shaft. The output shaft means a shaft that outputs rotational power in the dual clutch, and the output shaft may be a transmission input shaft or the like.

In addition, a configuration in which two members are 'operatively connected' means a configuration in which one member is connected to the other member so as to transmit rotational power of the one member to the other member, that is, means a configuration in which the two members are connected to each other by means of welding, bolting, riveting, spline engagement, or gear engagement so as to be rotatable together.

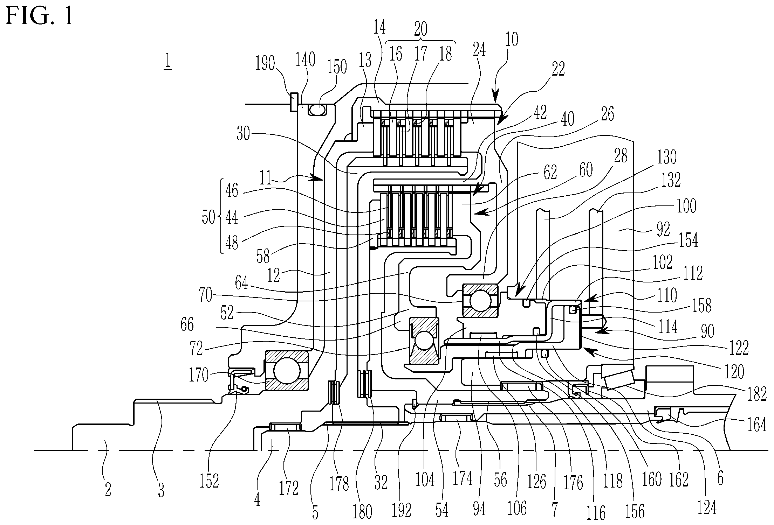

FIG. 1 is a cross-sectional view of the dual clutch according to the exemplary embodiment of the present invention.

As illustrated in FIG. 1, a dual clutch 1 according to the exemplary embodiment of the present invention is configured to selectively transmit rotational power of an input shaft 2 to a first output shaft 4 or a second output shaft 6. The dual clutch 1 includes a first clutch 10, a second clutch 40, and an actuator 90. The first clutch 10, the second clutch 40, and the actuator 90 are disposed in a transmission housing. The transmission housing is formed in a generally cylindrical shape having a space therein.

The input shaft 2, the first output shaft 4, and the second output shaft 6 are disposed at a central portion in the transmission housing. Here, one of the first output shaft 4 and the second output shaft 6 relates to implementation of odd-numbered gear shift stages (e.g., a first stage, a third stage, a fifth stage, and a seventh stage), and the other of the first output shaft 4 and the second output shaft 6 relates to implementation of even-numbered gear shift stages (e.g., a second stage, a fourth stage, a sixth stage, and an eighth stage). That is, the rotational power of the input shaft 2 is selectively transmitted to the first output shaft 4 or the second output shaft 6 by an operation of the first clutch 10 or the second clutch 40, such that the odd-numbered gear shift stages and the even-numbered gear shift stages are alternately implemented, thereby performing a gear shift operation.

The input shaft 2 is configured to input the rotational power of the power source (e.g., the engine or the motor) to the dual clutch 1 and may be the crank shaft, the motor shaft, or a separate shaft connected to the crank shaft or the motor shaft. Input shaft splines 3 are formed in the input shaft 2, such that the input shaft 2 may be operatively connected to the crank shaft, the motor shaft, or a torsional damper connected to the crank shaft or the motor shaft.

The first output shaft 4 and the second output shaft 6 may be two input shafts provided in the dual clutch transmission. The second output shaft 6 is formed as a hollow shaft, and the first output shaft 4 is disposed in the second output shaft 6 without rotational interference with the second output shaft 6. In addition, a front end of the first output shaft 4 protrudes axially forward from a front end of the second output shaft 6 and extends to an end of the input shaft 2. A bearing 172 is disposed between the end of the input shaft 2 and the front end of the first output shaft 4 so as to allow the input shaft 2 and the first output shaft 4 to smoothly rotate relative to each other. In addition, a bearing 174 is disposed between an intermediate portion of the first output shaft 4 and the front end of the second output shaft 6 so as to allow the first output shaft 4 and the second output shaft 6 to smoothly rotate relative to each other. A sealing member 164 is disposed between a rear end of the first output shaft 4 and a rear end of the second output shaft 6 so as to prevent oil, which is supplied to the dual clutch, from leaking to the outside. Splines 5 or gear teeth are formed in an outer circumferential surface at the front end of the first output shaft 4, and splines 7 or gear teeth are also formed in an outer circumferential surface at the front end of the second output shaft 6, but the present invention is not limited thereto.

The first clutch 10 is disposed at a radially outer side in the transmission housing. The first clutch 10 is configured to selectively transmit the rotational power of the input shaft 2 to the first output shaft 4 and includes a first clutch housing 11, a first disc pack 20, a first piston 22, and a first operating hub 30.

An inner portion of the first clutch housing 11 is formed integrally with the input shaft 2, and the first clutch housing 11 extends radially outward and defines a space in which components, which constitute the first clutch 10, may be mounted. In the present exemplary embodiment, the first clutch housing 11 is illustratively described as being formed integrally with the input shaft 2, but the present invention is not limited thereto. The first clutch housing 11 may be operatively coupled to the input shaft 2.

The first clutch housing 11 includes a first circular plate portion 12 which extends radially, a first support portion 13 which is formed at an outer end of the first circular plate portion 12 and configured to axially support the first disc pack 20, and a first cylindrical portion 14 which extends axially rearward from an outer end of the first support portion 13. The shape of the first clutch housing 11 may be determined in accordance with design intention of those skilled in the art and is not limited to the shape described and illustrated in the present specification and the drawings.

The first disc pack 20 is disposed between the first clutch housing 11 and the first operating hub 30 and selectively transmits the rotational power of the first clutch housing 11 to the first operating hub 30. The first disc pack 20 includes first separating plates 16, first friction discs 17, and first separating springs 18. The first separating spring 18 may be omitted as necessary, but the present invention is not limited thereto.

The multiple first separating plates 16 are coupled, by means of splines, to an inner circumferential surface of the first cylindrical portion 14.

The multiple first friction discs 17 are coupled, by means of splines, to an outer circumferential surface of the first operating hub 30, and the multiple first friction discs 17 and the multiple first separating plates 16 are alternately disposed.

One or more of the first separating springs 18 are disposed at radially outer sides of the first friction discs 17 and between the neighboring first separating plates 16 and provide axial elastic force to the first separating plates 16. The first separating springs 18 maintain intervals between the first separating plates 16 when the first clutch 10 is disengaged, thereby reducing drag torque and allowing the first clutch 10 to be smoothly disengaged. In particular, in the present exemplary embodiment, when axial force, which is applied to the first disc pack 20 by the first piston 22, disappears, the first separating springs 18 act as return springs to disengage the first clutch 10.

The first piston 22 selectively and frictionally engages with the first disc pack 20 so as to selectively transmit the rotational power of the first clutch housing 11 to the first operating hub 30.

The first piston 22 is coupled, by means of splines, to an inner circumferential surface of the first cylindrical portion 14 at a rear side of the multiple first separating plates 16 and is axially movable. The first piston 22 includes a first pressing portion 24, a first connecting portion 26, and a first accommodating portion 28.

The first pressing portion 24 is formed at a position corresponding to the first separating plates 16 and at a radially outer portion of the first piston 22. The first pressing portion 24 may apply axial force to the first separating plates 16 so as to allow the first separating plates 16 and the first friction discs 17 to frictionally engage with each other.

The first connecting portion 26 extends radially inward from the first pressing portion 24 to the actuator 90.

The first accommodating portion 28 is formed at a radially inner end of the first connecting portion 26 and extends axially forward. The first accommodating portion 28 is configured to accommodate a first application bearing 70.

The shape of the first piston 22 may be determined in accordance with design intention of those skilled in the art and is not limited to the shape described and illustrated in the present specification and the drawings.

The first operating hub 30 transmits the rotational power of the first clutch housing 11, which is transmitted through the first disc pack 20, to the first output shaft 4. Splines 32 or gear teeth are formed in an inner circumferential surface of the first operating hub 30 and may engage with the splines 5 or gear teeth of the first output shaft 4 so as to transmit power. A bearing 178 is interposed between a radially inner portion of the first operating hub 30 and a radially inner portion of the first clutch housing 11 to allow the first operating hub 30 and the first clutch housing 11 to smoothly rotate relative to each other, and the bearing 178 axially supports the first operating hub 30.

The second clutch 40 is disposed in the transmission housing and at a radially inner side of the first clutch 10. The second clutch 40 is connected to the first clutch housing 11 and configured to always receive the rotational power of the first clutch housing 11 and selectively transmit the rotational power to the second output shaft 6. The second clutch 40 includes a second clutch housing 42, a second disc pack 50, a second piston 60, a second operating hub 52, and a second support portion 58.

The second clutch housing 42 is formed in a cylindrical shape and defines a space in which components, which constitute the second clutch 40, may be mounted. The second clutch housing 42 is formed integrally with the first piston 22 and always receives the rotational power of the first clutch housing 11. The second clutch housing 42 extends axially forward from an intermediate portion of the first connecting portion 26 (a radially inner side of the first disc pack 20). In the present exemplary embodiment, the second clutch housing 42 is illustratively described as being formed integrally with the first piston 22, but the present invention is not limited thereto. That is, the second clutch housing 42 may be joined to the intermediate portion of the first connecting portion 26 by a method such as welding. The shape of the second clutch housing 42 may be determined in accordance with design intention of those skilled in the art and is not limited to the shape described and illustrated in the present specification and the drawings.

The second disc pack 50 is disposed between the second clutch housing 42 and the second operating hub 52 and selectively transmits the rotational power of the second clutch housing 42 to the second operating hub 52. The second disc pack 50 includes second separating plates 44, second friction discs 46, and second separating springs 48. The second separating spring 48 may be omitted as necessary, but the present invention is not limited thereto.

The multiple second separating plates 44 are coupled, by means of splines, to an outer circumferential surface of the second operating hub 52.

The multiple second friction discs 46 are coupled, by means of splines, to an inner circumferential surface of the second clutch housing 42, and the multiple second friction discs 46 and the multiple second separating plates 44 are alternately disposed.

One or more of the second separating springs 48 are disposed at radially inner sides of the second friction discs 46 and between the neighboring second separating plates 44 and provide axial elastic force to the second separating plates 44. The second separating springs 48 maintain intervals between the second separating plates 44 when the second clutch 40 is disengaged, thereby reducing drag torque and allowing the second clutch 40 to be smoothly disengaged. In particular, in the present exemplary embodiment, when axial force, which is applied to the second disc pack 50 by the second piston 60, disappears, the second separating springs 48 act as return springs to disengage the second clutch 40.

The second piston 60 selectively and frictionally engages with the second disc pack 50 so as to selectively transmit the rotational power of the second clutch housing 42 to the second operating hub 52. The second piston 60 is coupled, by means of splines, to an inner circumferential surface of the second clutch housing 42 at a rear side of the multiple second friction discs 46 and is axially movable. The second piston 60 includes a second pressing portion 62, a second connecting portion 64, and a second accommodating portion 66.

The second pressing portion 62 is formed at a position corresponding to the second friction discs 46 and at a radially outer portion of the second piston 60. The second pressing portion 62 may apply axial force to the second friction discs 46 so as to allow the second separating plates 44 and the second friction discs 46 to frictionally engage with each other.

The second connecting portion 64 extends radially inward from the second pressing portion 62 to the actuator 90. The second connecting portion 64 may rectilinearly extend radially inward. However, in the present exemplary embodiment, the second connecting portion 64 may be bent axially forward at a radially inner side of the second disc pack 50 and then may extend radially inward, for the purpose of efficient use of the space. The shape of the second connecting portion 64 may be determined in accordance with design intention of those skilled in the art and is not limited to the shape described and illustrated in the present specification and the drawings.

The second accommodating portion 66 is formed at a radially inner end of the second connecting portion 64 and extends axially rearward. The second accommodating portion 66 is configured to accommodate a second application bearing 72.

The shape of the second piston 60 may be determined in accordance with design intention of those skilled in the art and is not limited to the shape described and illustrated in the present specification and the drawings.

The second operating hub 52 transmits the rotational power of the second clutch housing 42, which is transmitted through the second disc pack 50, to the second output shaft 6. Splines 56 or gear teeth are formed in an inner diameter portion 54 of the second operating hub 52 and may engage with the splines 7 or gear teeth of the second output shaft 6 so as to transmit power. A bearing 180 is interposed between a radially inner portion of the second operating hub 52 and a radially inner portion of the first operating hub 30 to allow the second operating hub 52 and the first operating hub 30 to smoothly rotate relative to each other, and the bearing 180 axially supports the second operating hub 52. In addition, a snap ring 192 is mounted on an outer circumferential surface of the second output shaft 6 in order to further axially support the second operating hub 52.

The second support portion 58 is disposed at a front side of the outer circumferential surface of the second operating hub 52 and axially supports the second separating plates 44. Therefore, when the second piston 60 moves to the left based on the drawing, the second support portion 58 supports the second separating plates 44 and the second friction discs 46 so that the axial force may be applied to the second separating plates 44 and the second friction discs 46.

The actuator 90 is configured to provide operating force (axial force) to the first piston 22 and the second piston 60. The actuator 90 may be mounted inside the transmission housing or may be assembled on a rear surface of the transmission housing outside the transmission housing.

The actuator 90 includes an actuator housing 92. The actuator housing 92 is formed in the form of a thick circular plate. An inner diameter portion of the actuator housing 92 is recessed axially rearward to define an operating piston space in which first and second operating pistons 100 and 120 are mounted. A housing protruding portion 94, which extends axially forward, is formed at a radially inner side of the operating piston space of the actuator housing 92. A bearing 176 is interposed between the housing protruding portion 94 and an inner circumferential portion 54 of the second operating hub 72 to assist the smooth rotation of the second operating hub 72 and axially and radially support the second operating hub 72. In addition, a bearing 182 is interposed between a rear inner circumferential surface of the actuator housing 92 and a rear outer circumferential surface of the second output shaft 6 to assist the smooth rotation of the second output shaft 6 and axially and radially support the second output shaft 6. Furthermore, a sealing member 162 is disposed at a front side of the bearing 182 and between the housing protruding portion 94 and the second output shaft 6 to prevent the oil, which is supplied to the dual clutch, from leaking to the outside.

The first operating piston 100, a partition wall 110, and the second operating piston 120 are mounted in the operating piston space.

The first operating piston 100 is configured to provide the axial force to the first piston 22 through the first application bearing 70, and the second operating piston 120 is configured to provide the axial force to the second piston 60 through the second application bearing 72.

The first operating piston 100 is disposed in a radial space between an outer circumferential surface of the operating piston space and the partition wall 110. A first operating piston extension portion 104, which extends axially forward, is formed integrally with a front surface of the first operating piston 100. The first application bearing 70 is mounted on the first operating piston extension portion 104.

The second operating piston 120 is disposed in a radial space between the partition wall 110 and the housing protruding portion 94. A second operating piston extension portion 124, which extends axially forward, is formed integrally with a front surface of the second operating piston 120. The second application bearing 72 is mounted on the second operating piston extension portion 124.

The partition wall 110 is disposed between the first operating piston 100 and the second operating piston 120 so that the operation of the first operating piston 100 and the operation of the second operating piston 120 may be independently controlled. The partition wall 110 includes a partition wall mounting portion 112, a partition wall connecting portion 114, and a partition wall extension portion 116.

The partition wall mounting portion 112 is formed axially and mounted on an outer circumferential surface of the operating piston space by a method such as press-fitting.

The partition wall connecting portion 114 extends radially inward from a front end of the partition wall mounting portion.

The partition wall extension portion 116 extends axially forward from an inner end of the partition wall connecting portion 114.

An outer circumferential surface of the first operating piston 100 is in close contact with the outer circumferential surface of the operating piston space, and an inner circumferential surface of the first operating piston 100 is in close contact with an outer circumferential surface of the partition wall extension portion 116, such that a first operating piston chamber 102 is formed between a rear surface of the first operating piston 100 and the partition wall connecting portion 114.

An outer circumferential surface of the second operating piston 120 is in close contact with an inner circumferential surface of the partition wall mounting portion 112, and an inner circumferential surface of the second operating piston 120 is in close contact with an outer circumferential surface of the housing protruding portion 94, such that a second operating piston chamber 122 is formed between a rear surface of the second operating piston 120 and the actuator housing 92.

The first operating piston 100 is operatively connected to the first application bearing 70 and configured to apply the axial force to the first application bearing 70 while being moved axially forward by a hydraulic operating pressure supplied to the first operating piston chamber 102. To maintain leakproof sealability of the first operating piston chamber 102, a sealing member 154 may be mounted between the outer circumferential surface of the first operating piston 100 and the outer circumferential surface of the operating piston space, and a sealing member 156 may be mounted between the inner circumferential surface of the first operating piston 100 and the outer circumferential surface of the partition wall extension portion 116. In addition, a first sliding bearing 106 is mounted between the first operating piston extension portion 104 and the partition wall extension portion 116 to radially support the first operating piston 100.

The second operating piston extension portion 124 extends axially forward from the first operating piston extension portion 104, and the second operating piston extension portion 124 is operatively connected to the second application bearing 72. Therefore, the second operating piston 120 is configured to apply the axial force to the second application bearing 72 while being moved axially forward by a hydraulic operating pressure supplied to the second operating piston chamber 122. To maintain leakproof sealability of the second operating piston chamber 122, a sealing member 158 may be mounted between the outer circumferential surface of the second operating piston 120 and the inner circumferential surface of the partition wall mounting portion 112, and a sealing member 160 may be mounted between the inner circumferential surface of the second operating piston 120 and the outer circumferential surface of the housing protruding portion 94. In addition, a second sliding bearing 126 is mounted between the second operating piston extension portion 124 and the outer circumferential surface of the housing protruding portion 94 to radially support the second operating piston 120.

Meanwhile, with the shape of the partition wall 110, the outer circumferential surface of the second operating piston 120 is positioned to be closer to the radially outer side than is the inner circumferential surface of the first operating piston 100. In particular, the outer circumferential surface of the second operating piston 120 may be positioned to be closer to the radially inner side than is the outer circumferential surface of the first operating piston 100 to the extent of a thickness of the partition wall 110. If the thickness of the partition wall 110 is small, the outer circumferential surface of the second operating piston 120 and the outer circumferential surface of the first operating piston 100 may be positioned at almost the same radial position. Therefore, the operations of the first and second operating pistons 100 and 120 may be independently controlled by the partition wall 110, and a radial length of the space in which the first and second operating pistons 100 and 120 are mounted may be reduced, such that the spatial utilization may be improved and the compact actuator may be designed.

In this case, the second operating piston 120, the partition wall connecting portion 114, the first operating piston 100 are disposed sequentially from the axially rear side. In addition, the first operating piston extension portion 104, the partition wall extension portion 116, the second operating piston extension portion 124 are disposed sequentially from the radially outer side to the radially inner side.

Furthermore, a gap 118 is formed between the partition wall extension portion 116 and the second operating piston extension portion 124. Even though oil, which is supplied to the first operating piston chamber 102 or the second operating piston chamber 122, leaks out, the oil is discharged through the gap 118.

The actuator housing 92 has therein a first supply flow path 130 which is configured to supply the hydraulic operating pressure to the first operating piston chamber 102, and a second supply flow path 132 which is configured to supply the hydraulic operating pressure to the second operating piston chamber 122. The first supply flow path 130 fluidly communicates with the first operating piston chamber 102, and the second supply flow path 132 fluidly communicates with the second operating piston chamber 122. The oil supplied to the first supply flow path 130 and the oil supplied to the second supply flow path 132 may be independently controlled. On the other hand, to allow the alternate operations of the first and second clutches 22 and 60 to be smoothly performed, the first and second supply flow paths 130 and 132 are supplied with the oil from a single oil supply source and may be supplied with the oil as a switching valve (not illustrated) mounted on an oil supply route switches the flow paths. Even in this case, the operations of the first and second operating pistons 100 and 120 are independently controlled. That is, the oil, which is supplied and discharged to and from one operating piston chamber, does not affect the oil which is supplied and discharged to and from the other operating piston chamber. Therefore, the hydraulic pressure is simply controlled.

The dual clutch 1 according to the exemplary embodiment of the present invention further includes a front cover 140 which supports the first clutch housing 11 and prevents the leakage of the oil supplied into the space in the dual clutch 1. The front cover 140 is mounted at a front side of the first clutch housing 11 and between the transmission housing and the input shaft 2. That is, an outer end of the front cover 140 is mounted on the transmission housing and axially supported by the snap ring 190, and an inner end of the front cover 140 is mounted on the input shaft 2. A bearing 170 is mounted between an inner circumferential surface of the front cover 140 and an outer circumferential surface of the input shaft 2 and axially and radially supports the first clutch housing 11. In addition, a sealing member 152 is mounted at a front side of the bearing 170 and between the inner circumferential surface of the front cover 140 and the outer circumferential surface of the input shaft 2. In addition, a sealing member 150 is mounted between the outer circumferential surface of the front cover 140 and the transmission housing.

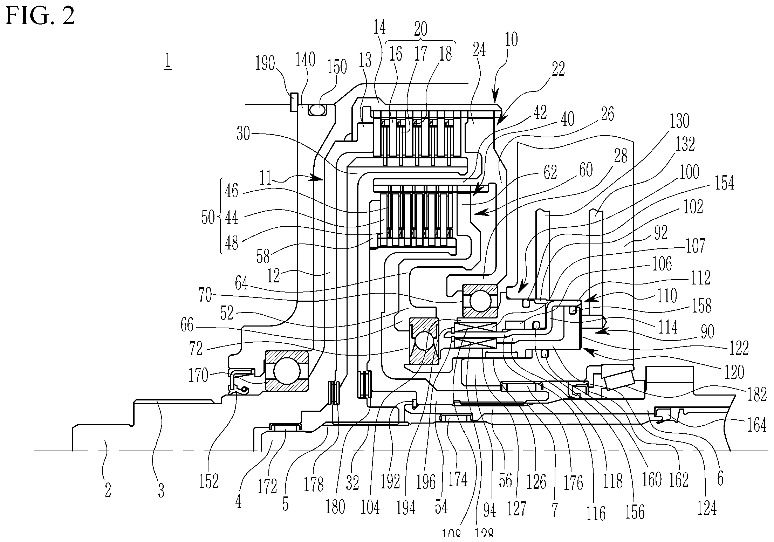

Hereinafter, an actuator for a dual clutch according to another exemplary embodiment of the present invention will be described with reference to FIG. 2.

FIG. 2 is a cross-sectional view of the dual clutch according to another exemplary embodiment of the present invention.

Referring to the accompanying drawings, it can be seen that the actuator according to another exemplary embodiment of the present invention is significantly and entirely similar to the actuator according to the above-mentioned exemplary embodiment of the present invention except for some constituent elements. Therefore, only different constituent elements will be described.

As illustrated in FIG. 2, according to another exemplary embodiment of the present invention, a first operating piston stepped portion 107 is formed on the first operating piston extension portion 104 so that the first operating piston extension portion 104 is radially spaced apart from the partition wall extension portion 116.

According to another exemplary embodiment of the present invention, a first return spring 108 is mounted in a space which is formed as the first operating piston extension portion 104 and the partition wall extension portion 116 are spaced apart from each other. In addition, a first snap ring 194 is mounted at a front side of the first return spring 108 and on the outer circumferential surface of the partition wall extension portion 116, such that the first return spring 108 is axially supported by the first snap ring 194 and the first operating piston stepped portion 107. The first return spring 108 provides the first operating piston 100 with restoring force that acts against the axial force produced by the hydraulic pressure supplied to the first operating piston chamber 102, thereby smoothly disengaging the first clutch 10.

Referring back to FIG. 2, according to another exemplary embodiment of the present invention, a second operating piston stepped portion 127 is formed between the second operating piston extension portion 124 and the partition wall extension portion 116. In addition, a second return spring 128 is mounted in a space which is formed as the second operating piston extension portion 124 and the partition wall extension portion 116 are spaced apart from each other. In addition, a second snap ring 196 is mounted at a front side of the second return spring 128 and on the inner circumferential surface of the partition wall extension portion 116, such that the second return spring 128 is axially supported by the second snap ring 196 and the second operating piston stepped portion 127. The second return spring 128 provides the second operating piston 120 with restoring force that acts against the axial force produced by the hydraulic pressure supplied to the second operating piston chamber 122, thereby smoothly disengaging the second clutch 40.

Because the actuator according to another exemplary embodiment of the present invention is identical to the actuator according to the exemplary embodiment of the present invention except for the above-mentioned constituent elements, a duplicated description will be omitted.

Hereinafter, the operation of the dual clutch according to the exemplary embodiments of the present invention will be described in detail.

The power of the crank shaft or the motor shaft is inputted to the input shaft 2 after torsional vibration is attenuated by a torsional damper, or the power is directly inputted to the input shaft 2. In this case, the first clutch housing 11 rotates together with the input shaft 2 since the first clutch housing 11 is formed integrally with the input shaft 2. In addition, the second clutch housing 42 also rotates since the second clutch housing 42 is formed integrally with the first piston 22 and the first piston 22 is coupled, by means of splines, to the first cylindrical portion 14 of the first clutch housing 11. That is, the input shaft 2, the first clutch housing 11, the first piston 22, and the second clutch housing 42 are rotated together by the same rotational power.

In this state, when the hydraulic operating pressure is supplied to the first operating piston chamber 102 through the first supply flow path 130, the first operating piston 100 pushes the first application bearing 70 to the left based on the drawing while moving to the left based on the drawing. In this case, the first piston 22 is moved to the left based on the drawing by the first application bearing 70 and applies the axial force to the first separating plate 16. Therefore, the first separating plates 16 and the first friction discs 17 frictionally engage with one another, and the rotational power of the first clutch housing 11 (i.e., the rotational power of the input shaft 2) is outputted to the first output shaft 4 through the first operating hub 30. In this case, the second clutch housing 42 formed integrally with the first piston 22 also axially moves to the left based on the drawing, but the second piston 60 and the second friction disc 46 are not axially moved since the second piston 60 and the second friction disc 46 are coupled, by means of splines, to the second clutch housing 42. In addition, the second separating springs 48 disposed between the neighboring second separating plates 44 maintain the intervals between the second separating plates 44. Therefore, the second clutch 40 is maintained in a disengaged state.

When the hydraulic operating pressure supplied to the first operating piston chamber 102 disappears in this state, the first piston 22 is moved to the right based on the drawing by the elastic force of the first separating springs 18. Therefore, the first clutch 10 is disengaged. In addition, the first operating piston 100 is moved to the right based on the drawing by the elastic force of the first separating springs 18, which is transmitted to the first operating piston 100 through the first application bearing 70, and the elastic force of the first return spring 108 (in the case illustrated in FIG. 2). Therefore, the hydraulic operating pressure supplied to the first operating piston chamber 102 is smoothly discharged.

When the hydraulic operating pressure is supplied to the second operating piston chamber 122 through the second supply flow path 132 in this state, the second operating piston 120 pushes the second application bearing 72 to the left based on the drawing while moving to the left based on the drawing. The second piston 60 applies the axial force to the second friction disc 46 while being axially moved to the left based on the drawing by the second application bearing 72. Therefore, the second separating plate 44 and the second friction disc 46 frictionally engage with one another, and the rotational power of the second clutch housing 42 (i.e., the rotational power of the input shaft 2) is outputted to the second output shaft 6 through the second operating hub 52.

When the hydraulic operating pressure supplied to the second operating piston chamber 122 disappears in this state, the second piston 60 is moved to the right based on the drawing by the elastic force of the second separating springs 48. Therefore, the second clutch 40 is disengaged. In addition, the second operating piston 120 is moved to the right based on the drawing by the elastic force of the second separating springs 48, which is transmitted to the second operating piston 120 through the second application bearing 72, and the elastic force of the second return spring 128 (in the case illustrated in FIG. 2). Therefore, the hydraulic operating pressure supplied to the second operating piston chamber 122 is smoothly discharged.

While this invention has been described in connection with what is presently considered to be practical exemplary embodiments, it is to be understood that the invention is not limited to the disclosed embodiments. On the contrary, it is intended to cover various modifications and equivalent arrangements included within the scope of the appended claims.

## Claims

1. A dual clutch (1) comprising:
a first clutch (10) which is configured to selectively transmit rotational power of an input shaft (2) to a first output shaft (4);
a second clutch (40) which is configured to selectively transmit the rotational power of the input shaft (2) to a second output shaft (6);
a first piston (22) which operates the first clutch (10) while being selectively and axially moved by axial force;
a second piston (60) which operates the second clutch (40) while being selectively and axially moved by the axial force; and
an actuator (90) configured to transmit the axial force to the first piston (22) or the second piston (60),
wherein the actuator (90) comprises:
an actuator housing (92) defining an operating piston space and formed with a housing protruding portion (94) at a radially inner side of the operating piston space;
a first operating piston (100) transmitting the axial force to the first piston (22);
a second operating piston (120) transmitting the axial force to the second piston (60); and
a partition wall (110) disposed between the first operating piston (100) and the second operating piston (120) and separating the first operating piston (100) and the second operating piston(120), such that an operation of the first operating piston (100) and an operation of the second operating piston (120) are independently controlled,
**characterized in that**:
the first operating piston (100) is disposed in the operating piston space between an outer circumferential surface of the operating piston space and the partition wall (110);
the second operating piston (120) is disposed in the operating piston space between the partition wall (110) and the housing protruding portion (94); and
an outer circumferential surface of the second operating piston (120) is positioned to be closer to a radially outer side of the operating piston space than is an inner circumferential surface of the first operating piston (100).

2. The dual clutch (1) of claim 1, wherein:
the partition wall (110) includes:
a partition wall mounting portion (112) which is mounted in the actuator housing (92), extends axially forward, and is in contact with an outer circumferential surface of the second operating piston (120) so that the outer circumferential surface of the second operating piston (120) is slidable;
a partition wall connecting portion (114) which extends radially inward from the partition wall mounting portion (112); and
a partition wall extension portion (116) which extends axially forward from an inner end of the partition wall connecting portion (114) and is in contact with an inner circumferential surface of the first operating piston (100) so that the inner circumferential surface of the first operating piston (100) is slidable.

3. The dual clutch (1) of claim 2, wherein:
the first operating piston (100) includes a first operating piston extension portion (104) which extends axially forward from a front surface of the first operating piston (100), and a first application bearing (70) is mounted on the first operating piston extension portion (104) and transmits the axial force to the first piston (22).

4. The dual clutch (1) of claim 2, wherein:
a first operating piston chamber (102) is formed between a rear surface of the first operating piston (100) and the partition wall connecting portion (114).

5. The dual clutch (1) of claim 2, wherein:
a first operating piston stepped portion (107) is formed at a radially inner side of the first operating piston extension portion (104),
a first snap ring (194) is mounted on an outer circumferential surface of the partition wall extension portion (116), and
a first return spring (108) is mounted between the first operating piston stepped portion (107) and the first snap ring (194).

6. The dual clutch (1) of claim 2, wherein:
the second operating piston (120) includes a second operating piston extension portion (124) which extends axially forward from a front surface of the second operating piston (120), and a second application bearing (72) is mounted on the second operating piston extension portion (124) and transmits the axial force to the second piston (60).

7. The dual clutch (1) of claim 6, wherein:
a second operating piston stepped portion (127) is formed on the outer circumferential surface of the second operating piston extension portion (124),
a second snap ring (196) is mounted on an inner circumferential surface of the partition wall extension portion (116), and
a second return spring (128) is mounted between the second operating piston stepped portion (127) and the second snap ring (196).

8. The dual clutch (1) of claim 6, wherein:
a second operating piston chamber (122) is formed between a rear surface of the second operating piston (120) and the actuator housing (92).

9. The dual clutch (1) of claim 2, wherein:
the first operating piston (100) includes a first operating piston extension portion (104) which extends axially forward from a front surface of the first operating piston (100),
the second operating piston (120)includes a second operating piston extension portion (124) which extends axially forward from a front surface of the second operating piston (120), and
the first operating piston extension portion (104), the partition wall extension portion (116), and the second operating piston extension portion (124) are disposed sequentially toward a radially inner side.

10. The dual clutch (1) of claim 2, wherein:
the second operating piston (120), the partition wall connecting portion (114), and the first operating piston (100) are disposed sequentially toward an axially front side.

11. The dual clutch (1) of claim 1, wherein:
the first clutch (10) includes a first clutch housing (11) which is operatively connected to the input shaft (2) and rotates together with the input shaft (2), and
the second clutch (40) includes a second clutch housing (42) which is operatively connected to the first clutch housing (11) through the first piston (22) and rotates together with the first clutch housing (11).

12. The dual clutch (1) of claim 11, wherein:
the first piston (22) is coupled, by means of splines, to an inner circumferential surface of the first clutch housing (11), and the second clutch housing (42) is joined to or formed integrally with the first piston (22).

13. The dual clutch (1) of claim 12, wherein:
the first clutch (10) includes a first disc pack (20) which is disposed between the first clutch housing (11) and a first operating hub (30) and selectively connects the first clutch housing (11) and the first operating hub (30), and
the first operating hub (30) is operatively coupled to the first output shaft (4).

14. The dual clutch (1) of claim 12, wherein:
the second clutch (40) includes a second disc pack (50) which is disposed between the second clutch housing (42) and a second operating hub (52) and selectively connects the second clutch housing (42) and the second operating hub (52), and
the second operating hub (52) is operatively coupled to the second output shaft (6).

## Patentansprüche

1. Doppelkupplung (1), aufweisend:
eine erste Kupplung (10), die ausgelegt ist, wahlweise eine Drehleistung einer Eingangswelle (2) auf eine erste Ausgangswelle (4) zu übertragen;
eine zweite Kupplung (40), die ausgelegt ist, wahlweise die Drehleistung der Eingangswelle (2) auf eine zweite Ausgangswelle (6) zu übertragen;
einen ersten Kolben (22), der die erste Kupplung (10) betätigt, während er wahlweise und axial durch eine axiale Kraft bewegt wird;
einen zweiten Kolben (60), der die zweite Kupplung (40) betätigt, während er wahlweise und axial durch die axiale Kraft bewegt wird; und
einen Aktuator (90), der ausgelegt ist, die axiale Kraft auf den ersten Kolben (22) oder den zweiten Kolben (60) zu übertragen,
wobei der Aktuator (90) aufweist:
ein Aktuatorgehäuse (92), das einen Betätigungskolbenraum definiert und mit einem Gehäusevorsprungabschnitt (94) an einer radial inneren Seite des Betätigungskolbenraums ausgebildet ist;
einen ersten Betätigungskolben (100), der die axiale Kraft auf den ersten Kolben (22) überträgt;
einen zweiten Betätigungskolben (120), der die axiale Kraft auf den zweiten Kolben (60) überträgt; und
eine Trennwand (110), die zwischen dem ersten Betätigungskolben (100) und dem zweiten Betätigungskolben (120) angeordnet ist und den ersten Betätigungskolben (100) und den zweiten Betätigungskolben (120) derart trennt, dass eine Betätigung des ersten Betätigungskolbens (100) und eine Betätigung des zweiten Betätigungskolbens (120) unabhängig gesteuert werden,
**dadurch gekennzeichnet, dass**:
der erste Betätigungskolben (100) in dem Betätigungskolbenraum zwischen einer Außenumfangsfläche des Betätigungskolbenraums und der Trennwand (110) angeordnet ist;
der zweite Betätigungskolben (120) in dem Betätigungskolbenraum zwischen der Trennwand (110) und dem Gehäusevorsprungabschnitt (94) angeordnet ist; und
eine Außenumfangsfläche des zweiten Betätigungskolbens (120) derart positioniert ist, dass sie sich näher zu einer radial äußeren Seite des Betätigungskolbenraums als eine Innenumfangsfläche des ersten Betätigungskolbens (100) befindet.

2. Doppelkupplung (1) nach Anspruch 1, wobei:
die Trennwand (110) umfasst:
einen Trennwandmontageabschnitt (112), der in dem Aktuatorgehäuse (92) montiert ist, sich axial nach vorn erstreckt und mit einer Außenumfangsfläche des zweiten Betätigungskolbens (120) derart in Kontakt ist, dass die Außenumfangsfläche des zweiten Betätigungskolbens (120) verschiebbar ist;
einen Trennwandverbindungsabschnitt (114), der sich von dem Trennwandmontageabschnitt (112) radial nach innen erstreckt; und
einen Trennwandverlängerungsabschnitt (116), der sich von einem inneren Ende des Trennwandverbindungsabschnitts (114) axial nach vorn erstreckt und mit einer Innenumfangsfläche des ersten Betätigungskolbens (100) derart in Kontakt ist, dass die Innenumfangsfläche des ersten Betätigungskolbens (100) verschiebbar ist.

3. Doppelkupplung (1) nach Anspruch 2, wobei:
der erste Betätigungskolben (100) einen ersten Betätigungskolbenverlängerungsabschnitt (104) umfasst, der sich von einer vorderen Fläche des ersten Betätigungskolbens (100) axial nach vorn erstreckt, und ein erstes Angriffslager (70) an dem ersten Betätigungskolbenverlängerungsabschnitt (104) montiert ist und die axiale Kraft auf den ersten Kolben (22) überträgt.

4. Doppelkupplung (1) nach Anspruch 2, wobei:
eine erste Betätigungskolbenkammer (102) zwischen einer hinteren Fläche des ersten Betätigungskolbens (100) und dem Trennwandverbindungsabschnitt (114) ausgebildet ist.

5. Doppelkupplung (1) nach Anspruch 2, wobei:
ein erster Betätigungskolbenstufenabschnitt (107) an einer radial inneren Seite des ersten Betätigungskolbenverlängerungsabschnitts (104) ausgebildet ist,
ein erster Sprengring (194) an einer Außenumfangsfläche des Trennwandverlängerungsabschnitts (116) montiert ist, und
eine erste Rückholfeder (108) zwischen dem ersten Betätigungskolbenstufenabschnitt (107) und dem ersten Sprengring (194) montiert ist.

6. Doppelkupplung (1) nach Anspruch 2, wobei:
der zweite Betätigungskolben (120) einen zweiten Betätigungskolbenverlängerungsabschnitt (124) umfasst, der sich von einer vorderen Fläche des zweiten Betätigungskolbens (120) axial nach vorn erstreckt, und ein zweites Angriffslager (72) an dem zweiten Betätigungskolbenverlängerungsabschnitt (124) montiert ist und die axiale Kraft auf den zweiten Kolben (60) überträgt.

7. Doppelkupplung (1) nach Anspruch 6, wobei:
ein zweiter Betätigungskolbenstufenabschnitt (127) an der Außenumfangsfläche des zweiten Betätigungskolbenverlängerungsabschnitts (124) ausgebildet ist,
ein zweiter Sprengring (196) an einer Innenumfangsfläche des Trennwandverlängerungsabschnitts (116) montiert ist, und
eine zweite Rückholfeder (128) zwischen dem zweiten Betätigungskolbenstufenabschnitt (127) und dem zweiten Sprengring (196) montiert ist.

8. Doppelkupplung (1) nach Anspruch 6, wobei:
eine zweite Betätigungskolbenkammer (122) zwischen einer hinteren Fläche des zweiten Betätigungskolbens (120) und dem Aktuatorgehäuse (92) ausgebildet ist.

9. Doppelkupplung (1) nach Anspruch 2, wobei:
der erste Betätigungskolben (100) einen ersten Betätigungskolbenverlängerungsabschnitt (104) umfasst, der sich von einer vorderen Fläche des ersten Betätigungskolbens (100) axial nach vorn erstreckt,
der zweite Betätigungskolben (120) einen zweiten Betätigungskolbenverlängerungsabschnitt (124) umfasst, der sich von einer vorderen Fläche des zweiten Betätigungskolbens (120) axial nach vorn erstreckt, und
der erste Betätigungskolbenverlängerungsabschnitt (104), der Trennwandverlängerungsabschnitt (116) und der zweite Betätigungskolbenverlängerungsabschnitt (124) nacheinander hin zu einer radial inneren Seite angeordnet sind.

10. Doppelkupplung (1) nach Anspruch 2, wobei:
der zweite Betätigungskolben (120), der Trennwandverbindungsabschnitt (114) und der erste Betätigungskolben (100) nacheinander hin zu einer axial vorderen Seite angeordnet sind.

11. Doppelkupplung (1) nach Anspruch 1, wobei:
die erste Kupplung (10) ein erstes Kupplungsgehäuse (11) umfasst, das mit der Eingangswelle (2) wirkverbunden ist und sich zusammen mit der Eingangswelle (2) dreht, und
die zweite Kupplung (40) ein zweites Kupplungsgehäuse (42) umfasst, das mit dem ersten Kupplungsgehäuse (11) durch den ersten Kolben (22) wirkverbunden ist und sich zusammen mit dem ersten Kupplungsgehäuse (11) dreht.

12. Doppelkupplung (1) nach Anspruch 11, wobei:
der ersten Kolben (22) mittels Keilverzahnungen mit einer Innenumfangsfläche des ersten Kupplungsgehäuses (11) gekoppelt ist, und das zweite Kupplungsgehäuse (42) an den ersten Kolben (22) gefügt ist oder mit diesem integral ausgebildet ist.

13. Doppelkupplung (1) nach Anspruch 12, wobei:
die erste Kupplung (10) ein erstes Scheibenpaket (20) umfasst, das zwischen dem ersten Kupplungsgehäuse (11) und einer ersten Betätigungsnabe (30) angeordnet ist und wahlweise das erste Kupplungsgehäuse (11) und die erste Betätigungsnabe (30) verbindet, und
die erste Betätigungsnabe (30) mit der ersten Ausgangswelle (4) wirkgekoppelt ist.

14. Doppelkupplung (1) nach Anspruch 12, wobei:
die zweite Kupplung (40) ein zweites Scheibenpaket (50) umfasst, das zwischen dem zweiten Kupplungsgehäuse (42) und einer zweiten Betätigungsnabe (52) angeordnet ist und wahlweise das zweite Kupplungsgehäuse (42) und die zweite Betätigungsnabe (52) verbindet, und
die zweite Betätigungsnabe (52) mit der zweiten Ausgangswelle (6) wirkgekoppelt ist.

## Revendications

1. Double embrayage (1), comprenant :
un premier embrayage (10) qui est configuré pour sélectivement transmettre une puissance de rotation d'un arbre d'entrée (2) à un premier arbre de sortie (4) ;
un second embrayage (40) qui est configuré pour sélectivement transmettre la puissance de rotation de l'arbre d'entrée (2) à un second arbre de sortie (6) ;
un premier piston (22) qui fait fonctionner le premier embrayage (10) tout en étant sélectivement et axialement déplacé par une force axiale ;
un second piston (60) qui fait fonctionner le second embrayage (40) tout en étant sélectivement et axialement déplacé par la force axiale ; et
un actionneur (90) configuré pour transmettre la force axiale au premier piston (22) ou au second piston (60),
dans lequel l'actionneur (90) comprend :
un logement d'actionneur (92) définissant un espace de piston de fonctionnement et formé avec une partie saillante de logement (94) sur un côté radialement intérieur de l'espace de piston de fonctionnement ;
un premier piston de fonctionnement (100) transmettant la force axiale au premier piston (22) ;
un second piston de fonctionnement (120) transmettant la force axiale au second piston (60) ; et
une cloison de séparation (110) disposée entre le premier piston de fonctionnement (100) et le second piston de fonctionnement (120) et séparant le premier piston de fonctionnement (100) et le second piston de fonctionnement(120), de telle sorte qu'un fonctionnement du premier piston de fonctionnement (100) et un fonctionnement du second piston de fonctionnement (120) soient indépendamment commandés,
**caractérisé en ce que** :
le premier piston de fonctionnement (100) est disposé dans l'espace de piston de fonctionnement entre une surface circonférentielle extérieure de l'espace de piston de fonctionnement et la cloison de séparation (110) ;
le second piston de fonctionnement (120) est disposé dans l'espace de piston de fonctionnement entre la cloison de séparation (110) et la partie saillante de logement (94) ; et
une surface circonférentielle extérieure du second piston de fonctionnement (120) est positionnée pour être plus près d'un côté radialement extérieur de l'espace de piston de fonctionnement qu'une surface circonférentielle intérieure du premier piston de fonctionnement (100).

2. Double embrayage (1) selon la revendication 1, dans lequel :
la cloison de séparation (110) inclut :
une partie de montage de cloison de séparation (112) qui est montée dans le logement d'actionneur (92), s'étend axialement vers l'avant, et est en contact avec une surface circonférentielle extérieure du second piston de fonctionnement (120) pour que la surface circonférentielle extérieure du second piston de fonctionnement (120) soit coulissante ;
une partie de raccordement de cloison de séparation (114) qui s'étend radialement vers l'intérieur à partir de la partie de montage de cloison de séparation (112) ; et
une partie d'extension de cloison de séparation (116) qui s'étend axialement vers l'avant à partir d'une extrémité intérieure de la partie de raccordement de cloison de séparation (114) et est en contact avec une surface circonférentielle intérieure du premier piston de fonctionnement (100) pour que la surface circonférentielle intérieure du premier piston de fonctionnement (100) soit coulissante.

3. Double embrayage (1) selon la revendication 2, dans lequel :
le premier piston de fonctionnement (100) inclut une partie d'extension de premier piston de fonctionnement (104) qui s'étend axialement vers l'avant à partir d'une surface avant du premier piston de fonctionnement (100), et un premier palier d'application (70) est monté sur la partie d'extension de premier piston de fonctionnement (104) et transmet la force axiale au premier piston (22).

4. Double embrayage (1) selon la revendication 2, dans lequel :
une chambre de premier piston de fonctionnement (102) est formée entre une surface arrière du premier piston de fonctionnement (100) et la partie de raccordement de cloison de séparation (114).

5. Double embrayage (1) selon la revendication 2, dans lequel :
une partie épaulée de premier piston de fonctionnement (107) est formée sur un côté radialement intérieur de la partie d'extension de premier piston de fonctionnement (104),
un premier anneau de retenue (194) est monté sur une surface circonférentielle extérieure de la partie d'extension de cloison de séparation (116), et
un premier ressort de rappel (108) est monté entre la partie épaulée de premier piston de fonctionnement (107) et le premier anneau de retenue (194).

6. Double embrayage (1) selon la revendication 2, dans lequel :
le second piston de fonctionnement (120) inclut une partie d'extension de second piston de fonctionnement (124) qui s'étend axialement vers l'avant à partir d'une surface avant du second piston de fonctionnement (120), et un second palier d'application (72) est monté sur la partie d'extension de second piston de fonctionnement (124) et transmet la force axiale au second piston (60).

7. Double embrayage (1) selon la revendication 6, dans lequel :
une partie épaulée de second piston de fonctionnement (127) est formée sur la surface circonférentielle extérieure de la partie d'extension de second piston de fonctionnement (124),
un second anneau de retenue (196) est monté sur une surface circonférentielle intérieure de la partie d'extension de cloison de séparation (116), et
un second ressort de rappel (128) est monté entre la partie épaulée de second piston de fonctionnement (127) et le second anneau de retenue (196).

8. Double embrayage (1) selon la revendication 6, dans lequel :
une chambre de second piston de fonctionnement (122) est formée entre une surface arrière du second piston de fonctionnement (120) et le logement d'actionneur (92).

9. Double embrayage (1) selon la revendication 2, dans lequel :
le premier piston de fonctionnement (100) inclut une partie d'extension de premier piston de fonctionnement (104) qui s'étend axialement vers l'avant à partir d'une surface avant du premier piston de fonctionnement (100),
le second piston de fonctionnement (120) inclut une partie d'extension de second piston de fonctionnement (124) qui s'étend axialement vers l'avant à partir d'une surface avant du second piston de fonctionnement (120), et
la partie d'extension de premier piston de fonctionnement (104), la partie d'extension de cloison de séparation (116), et la partie d'extension de second piston de fonctionnement (124) sont disposées séquentiellement vers un côté radialement intérieur.

10. Double embrayage (1) selon la revendication 2, dans lequel :
le second piston de fonctionnement (120), la partie de raccordement de cloison de séparation (114), et le premier piston de fonctionnement (100) sont disposés séquentiellement vers un côté axialement avant.

11. Double embrayage (1) selon la revendication 1, dans lequel :
le premier embrayage (10) inclut un premier logement d'embrayage (11) qui est fonctionnellement raccordé à l'arbre d'entrée (2) et entre en rotation conjointement avec l'arbre d'entrée (2), et
le second embrayage (40) inclut un second logement d'embrayage (42) qui est fonctionnellement raccordé au premier logement d'embrayage (11) par l'intermédiaire du premier piston (22) et entre en rotation conjointement avec le premier logement d'embrayage (11).

12. Double embrayage (1) selon la revendication 11, dans lequel :
le premier piston (22) est couplé, au moyen de cannelures, à une surface circonférentielle intérieure du premier logement d'embrayage (11), et le second logement d'embrayage (42) est joint au premier piston (22) ou formé de façon monobloc avec ce dernier.

13. Double embrayage (1) selon la revendication 12, dans lequel :
le premier embrayage (10) inclut un premier bloc de disques (20) qui est disposé entre le premier logement d'embrayage (11) et un premier moyeu de fonctionnement (30) et raccorde sélectivement le premier logement d'embrayage (11) et le premier moyeu de fonctionnement (30), et
le premier moyeu de fonctionnement (30) est fonctionnellement couplé au premier arbre de sortie (4).

14. Double embrayage (1) selon la revendication 12, dans lequel :
le second embrayage (40) inclut un second bloc de disques (50) qui est disposé entre le second logement d'embrayage (42) et un second moyeu de fonctionnement (52) et raccorde sélectivement le second logement d'embrayage (42) et le second moyeu de fonctionnement (52), et
le second moyeu de fonctionnement (52) est fonctionnellement couplé au second arbre de sortie (6).
